# EUROPÄISCHE PATENTSCHRIFT

(11) **EP 0 619 198 B1**
(45) Veröffentlichungstag und Bekanntmachung des Hinweises auf die Patenterteilung: **01.07.1998**
(21) Anmeldenummer: 94104275.6
(22) Anmeldetag: 18.03.1994
(51) Int. Cl.: B60J 7/00

(54) **Fahrzeugdach mit Glasdeckel und Sonnenblende**
Vehicle roof with glass panel and sun visor
Toit de véhicule avec panneau en verre et pare-soleil

(30) Priorität: 03.04.1993 DE 4311049
(43) Veröffentlichungstag der Anmeldung: 12.10.1994
(73) Patentinhaber: Rockwell International GmbH, 60314 Frankfurt (DE)
(72) Erfinder: Hattass, Rainer, D-63584 Gründau (DE)
(74) Vertreter: Oppermann, Ewald, Dipl.-Ing.

(56) Entgegenhaltungen:
- DE-A- 3 242 097
- DE-C- 4 232 660
- DE-U- 8 901 830
- DE-U- 9 014 975

## Beschreibung

Die Erfindung bezieht sich auf ein Fahrzeugdach gemäß dem Oberbegriff des Patentanspruchs 1.

Glasdeckel füllen in der geschlossenen Dachstellung unter allseitiger Abdichtung die Dachöffnung vollständig aus. Üblicherweise befindet sich bei mit Glasdeckel ausgerüsteten Schiebehebedächern unterhalb des Deckels ein Schiebehimmel aus lichtundurchlässigem Material, welcher an seitlichen Führungsschienen längs verschiebbar geführt ist. Gewöhnlich bleibt im Fahrbetrieb der Schiebehimmel bei geschlossenem Deckel in Offenstellung, um einen Lichteinfall, oder bei offenem Deckel eine optimale Lüftung zu ermöglichen. Bei intensiver Sonneneinstrahlung verhindert der zugeschobene Himmel eine Aufheizung des Innenraums und eine als unangenehm empfundene Bestrahlung der Fahrzeuginsassen. Bei Lüftungsklappen, deren Glasdeckel nur mit der Hinterkante nach oben verschwenkt werden können, ist es ebenfalls üblich, die Insassen durch einen Sonnenschutz vor direkter Sonneneinstrahlung zu schützen.

Bei einem bekannten Fahrzeugdach gemäß der DE 32 42 097 C2, die den Oberbegriff des Patentanspruchs 1 bildet, ist die mit in bestimmter Konfiguration angeordneten Lichtdurchlässen versehene Sonnenblende durch die entsprechend ausgebildete verschiebbare Verschlußplatte hinsichtlich des Lichtdurchgangs zwischen einer vollständigen Öffnungsstellung und einer vollständigen Schließstellung einstellbar. Zu diesem Zweck ist bei der hier interessierenden Ausführungsform des bekannten Fahrzeugdachs die Sonnenblende mit erheblichem Abstand unterhalb des Glasdeckels über vorn und hinten angebrachte und Bohrungen in dem Glasdeckel erfordernde Halterungselemente am Glasdeckel befestigt. Die ebene Verschlußplatte befindet sich zwischen dem Glasdeckel und der Sonnenblende und liegt an dieser von oben her an. Die Verschlußplatte ist mit gegenüberliegenden Seitenkanten an besonderen Führungsschienen geführt, die an der Sonnenblende in Fahrzeuglängsrichtung angebracht sind. Am vorderen Ende der Verschlußplatte befindet sich ein griffartiges Stellglied. Die eingestellte Lage der Verschlußplatte soll durch die Reibung zwischen der Verschlußplatte und den Führungsschienen arretiert werden.

Die von dem Glasdeckel gewissermaßen abgehängte Sonnenblendenanordnung verringert nicht nur die Kopffreiheit unter dem Glasdeckel, sondern erschwert auch die Ausbildung des Fahrzeugdaches als sogenanntes Spoiler- oder Oberfirstschiebedach, weil dabei die erhebliche Bauhöhe des Deckels berücksichtigt werden muß. Entsprechendes gilt auch für die Ausbildung des bekannten Fahrzeugdaches als Schiebedach, weil hierbei die erhebliche Deckelbauhöhe in dem Aufnahmeraum unterhalb der hinteren festen Dachfläche untergebracht werden muß, wobei in konstruktiver Hinsicht auf die Vermeidung von Beschädigungen der Sonnenblende beim Verschiebevorgang zu achten ist.

Des Weiteren zeigt die DE 90 14 975 U1 eine aus zwei (Glas-)Scheiben bestehende Anordnung mit variabler Transparenz, die für Gebäude und Fahrzeuge bestimmt ist. Aufgabe der Anordnung ist es, über die gezielte Variation der Transparenz hinaus eine Nutzung des einfallenden Sonnenlichts zu ermöglichen. Zu diesem Zweck ist die äußere Scheibe innen mit einer photovoltaisch wirksamen Dünnschicht, vorzugsweise auf der Basis von amorphem Silizium, versehen, während die innere Scheibe mit einer vorzugsweise in Siebdrucktechnik hergestellten Farbschicht versehen ist. Dabei ist die innere Scheibe gegenüber der äußeren Scheibe verstellbar, allerdings können auch beide Scheiben beweglich angeordnet sein.

Obwohl die Anordnung gemäß diesem Stand der Technik auch für Fahrzeuge bestimmt sein soll, fehlen hier doch Hinweise, an welche Anwendungsorte am Fahrzeug gedacht ist. Eine Verwendung der bekannten Anordnung als Glasdeckel für ein Fahrzeugdach erscheint allerdings ausgeschlossen, weil bei zwei aufeinanderliegenden Glasscheiben ein solcher Deckel etwa das doppelte Gewicht hätte, was seine verstellbare Anordnung und Zuordnung in bezug auf eine Dachöffnung mindestens unwahrscheinlich macht. Außerdem bestünden auch dann infolge der Glasaufdoppelung Probleme betreffend die Kopffreiheit.

Der Erfindung liegt die Aufgabe zugrunde, ein Fahrzeugdach nach dem Oberbegriff des Patentanspruchs 1 bereitzustellen, das bei einfacher und vergleichsweise nur aus wenigen Teilen bestehender Ausbildung im Bereich des Glasdeckels eine vergrößerte Kopffreiheit gewährt.

Diese Aufgabe wird durch die kennzeichnenden Merkmale des Patentanspruchs 1 gelöst. Vorteilhafte Weiterbildungen der Erfindung sind in den Patentansprüchen 2 bis 7 angegeben.

Durch die Ausbildung der Sonnenblende als Glasdeckelbeschichtung wird die Herstellung und Anbringung einer plattenförmigen getrennten Sonnenblende vermieden. Gesonderte Befestigungselemente für die Sonnenblende und die Anbringung von Befestigungsbohrungen im Glasdeckel sowie entsprechende Montagearbeiten entfallen daher. Die dieser dünnen Sonnenblende unmittelbar von unten anliegende Verschlußplatte aus einem federnd durchbiegbaren Material ist ebenfalls sehr dünn ausgebildet, so daß praktisch unter dem Glasdeckel keine Verringerung der Kopffreiheit eintritt. Die Ausbildung der Führungen für die Verschlußplatte an dem Deckelrahmen macht gesonderte Führungsschienen überflüssig. Der erfindungsgemäß ausgebildete Glasdeckel läßt sich wegen seiner von der Anbringung einer einstellbaren Sonnenblende praktisch unbeeinflußten geringen Bauhöhe ohne besondere Schwierigkeiten für alle gängigen Fahrzeugdächer, wie Schiebedächer, Schiebehebedächer, Spoilerdächer und Lüftungsklappendächer, einsetzen. Die die Sonnenblende bildende Beschichtung des Glasdeckels eine durch Siebdruck aufgebrachte Farbschicht. Für die dauerhafte Siebdruckbeschichtung von Glasflächen an Fahrzeugen sind geeignete Farbmaterialien schon seit längerer Zeit im Handel, so daß nähere Angaben dazu entbehrlich sind. Die überwiegend schwarzen Farben werden verhältnismäßig dünn aufgetragen und liefern eine gitterartige Sonnenblendenstruktur aus lichtundurchlässig abgedeckten Glasflächen, deren geometrische Form und Verteilung von der Gestalt der Lichtdurchlässe in der Sonnenblende sowie der Verschlußabschnitte und Öffnungen in der Verschlußplatte abhängen.

Vorteilhaft ist die aufgedruckte Sonnenblende zugleich mit dem üblichen auf den Glasdeckel von unten aufgedruckten Dekorrahmen angebracht, wie das im Patentanspruch 2 angegeben ist.

Der die Glasscheibe des Glasdeckels einfassende Deckelrahmen ist in seinen der Glasscheibe von unten anliegenden vorderen und seitlichen Bereichen zweckmäßig entsprechend dem Patentanspruch 3 zur Bildung einer vorn und seitlich durchgehenden Aufnahmenut für die Führung der Verschlußplatte ausgebildet. Diese Aufnahmenut läßt sich günstig bereits bei Anbringung des Einfaßrahmens durch Umspritzen oder Umschäumen der Glasplatte mit Kunststoff, z.B. mit Polyurethan, anbringen.

Die aus einem dünnen elastisch biegbaren Material, beispielweise als Aluminiumplatte von etwa 0,5 mm Dicke oder als entsprechende Kunststoffplatte, hergestellte Verschlußplatte wird vorteilhaft wie im Patentanspruch 4 angegeben am Deckelrahmen angebracht.

Eine weitere Ausbildung der Erfindung durch Anbringung einer handbetätigten Antriebsvorrichtung für die Verschlußplattenverschiebungen geht aus dem Patentanspruch 5 hervor. Die sehr einfache und funktionssichere Vorrichtung erlaubt zwar eine leichtgängige Verstellverschiebung der Verschlußplatte, erhöht jedoch vorteilhaft den Reibungswiderstand gegen unbeabsichtigtes Verschieben der Verschlußplatte infolge von darauf einwirkenden Trägheitskräften.

Zweckmäßig wird gemäß dem Patentanspruch 6 einer der Lichtdurchlässe in der Verschlußplatte für den Antriebseingriff nutzbar gemacht.

Vorteilhaft ist die Anordnung entsprechend dem Patentanspruch 7 so getroffen, daß die beiden Querteile des Deckelrahmens die Anschlagglieder für die Verschlußplatte sind, wenn diese wahlweise die Sonnenblende vollständig geöffnet oder vollständig geschlossen hat.

Ein Ausführungsbeispiel der Erfindung wird nachfolgend anhand der Zeichnungen näher erläutert. Darin zeigen in teilweise schematischen Darstellungen:
- Fig. 1: die abgebrochene Draufsicht eines Glasdeckels für ein Fahrzeugdach, mit vollständig geöffneten Lichtdurchlässen der Sonnenblende,
- Fig. 2: die Fig. 1 entsprechende Draufsicht des Glasdeckels, jedoch bei vollständig geschlossenen Lichtdurchlässen der Sonnenblende,
- Fig. 3: den unterbrochenen Längsschnitt durch den Glasdeckel entsprechend der Linie III-III in Fig. 1,
- Fig. 4: den unterbrochenen Längsschnitt durch den Glasdeckel entsprechend der Linie IV-IV in Fig. 2,
- Fig. 5: den abgebrochenen Querschnitt durch den Glasdeckel entsprechend der Linie V-V in Fig. 1,
- Fig. 6: die abgebrochene Draufsicht auf den die Antriebsvorrichtung aufweisenden Bereich des Glasdeckels und
- Fig. 7: den abgebrochenen Längsschnitt durch den Bereich der Antriebsvorrichtung entsprechend der Linie VII-VII in Fig. 6.

In den Zeichnungen ist lediglich der Glasdeckel 1, nicht dagegen das übliche Konstruktionsumfeld eines Schiebedaches, Schiebehebedaches, Spoilerdaches oder Lüftungsklappendaches dargestellt. Der Glasdeckel 1 setzt sich zusammen aus einer Glasscheibe 2 (wobei unter diesem Begriff Scheiben aus jedem durchsichtigen Werkstoff verstanden werden), einem die Glasscheibe von unten unterstützenden umlaufenden Verstärkungsrahmen 3 aus profiliertem Blechmaterial und einem die Glasscheibe 2 und den Verstärkungsrahmen 3 im Randbereich zusammenfassenden um den Deckelumfang umlaufenden Deckel- oder Einfaßrahmen 4. Der Einfaßrahmen 4 kann abweichend von der gezeichneten Ausbildung aus einem oberen Abdeckrahmen, welcher den Rand der Glasscheibe überdeckt, und dem Verstärkungsrahmen bestehen, der von unten mit dem Abdeckrahmen verschraubt ist. Bei der bevorzugten Ausführungsform ist jedoch der Einfaßrahmen 4 unter Einbettung des Verstärkungsrahmens 3 durch Umspritzen oder Umschäumen der Glasscheibe 2 mit Kunststoff, beispielsweise mit Polyurethan, gebildet. Dabei kann an dem Außenumfang des Einfaßrahmens 4 ein leistenförmiger hinterschnittener Vorsprung 5 angeformt werden, welcher der Aufnahme der bei derartigen Fahrzeugdächern üblichen Randspaltabdichtung dient. Mit dem Verstärkungsrahmen 3 verbunden sind nach unten weisende und über den Einfaßrahmen 4 vorstehende Aufnahmelaschen 6 zur Befestigung von Deckelbetätigungs- und Lagerelementen (nicht gezeigt).

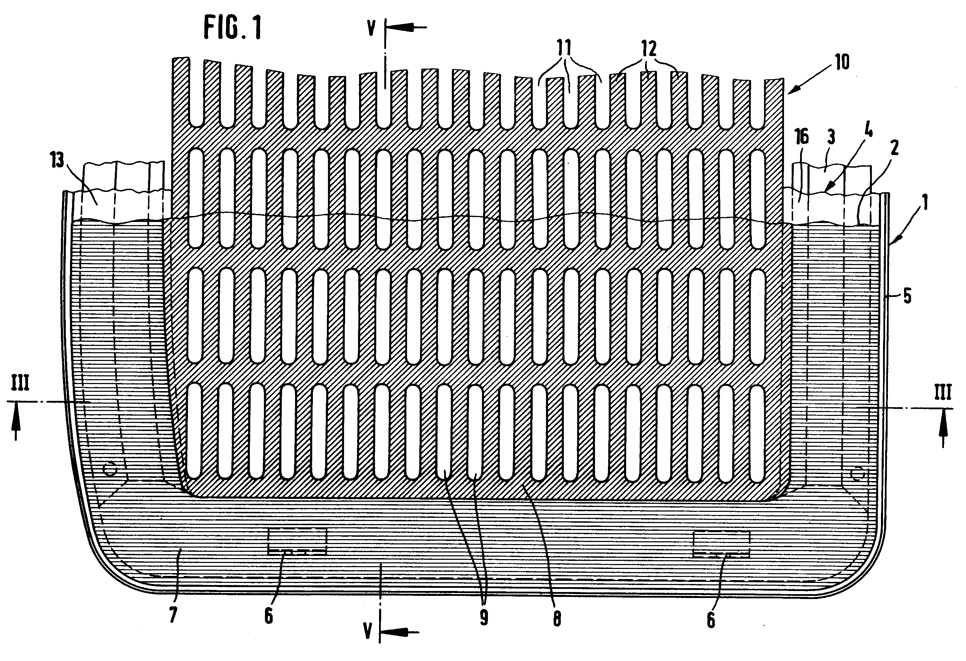

Die Glasscheibe 2 ist wie üblich mit einem randbündig umlaufenden und undurchsichtigen Dekorrahmen 7 gegen Einsichtnahme von oben versehen. Dieser Dekorrahmen 7 wird im Siebdruckverfahren auf die Unterfläche der Glasscheibe 2 vor dem Anbringen des Einfaßrahmens 4 angebracht. Der Dekorrahmen ist in den Figuren 1, 2 und 6 durch eine parallel zu den Seitenkanten des Glasdeckels 1 verlaufende Schraffur kenntlich gemacht. Bei dem Siebdruckvorgang wird gleichzeitig und ebenfalls auf der Unterfläche der Glasscheibe 2 innerhalb der von dem Dekorrahmen 7 umgrenzten Fläche ein die Sonnenblende 8 bildendes Gitter aus ebenfalls lichtundurchlässigen, d.h. undurchsichtigen zusammenhängenden Flächen aufgedruckt.

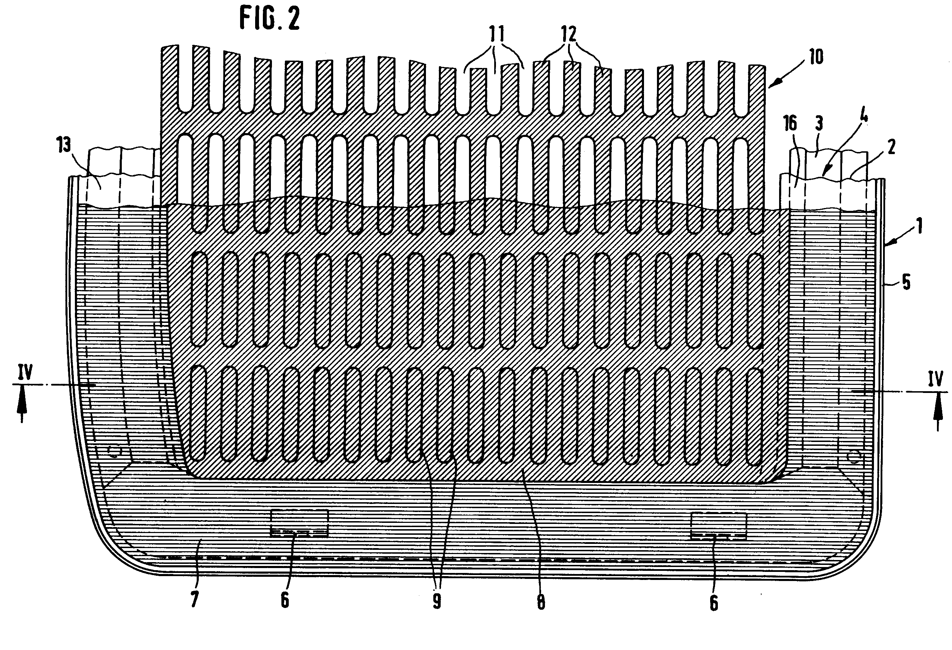

Diese gitterartige Sonnenblende 8 ist in den Figuren 1 und 2 durch eine unter 45° zu den Seitenkanten des Glasdeckels 1 verlaufende Schraffur kenntlich gemacht. Aufgrund dieses gitterartigen Aufdrucks entsteht eine Sonnenblende 8 mit mehreren Reihen von in Fahrzeuglängsrichtung gleichmäßig beabstandeten Lichtdurchlässen 9, die in Form von Querschlitzen gleicher Abmessungen vorgesehen sind. Die Lichtdurchlässe 9 sind durch die Längs- und Querstege des aufgedruckten Gitters der Sonnenblende 8 umgrenzt. Auf diese Weise alternieren lichtundurchlässige mit lichtdurchlässigen Flächenbereichen der Glasscheibe 2.

In den Längs- und Querschnittdarstellungen der Zeichnungen sind der Dekorrahmen 7 und die von ihm eingefaßte Sonnenblende 8 zur Verdeutlichung übertrieben dick dargestellt. Der Sonnenblende 8 bzw. der Glasscheibe 2 liegt von unten die Verschlußplatte 10 unmittelbar an. Wie die Sonnenblende 8 ist auch die Verschlußplatte 10 mit mehreren Reihen gleichmäßig beabstandeter Öffnungen 11 versehen, die in Anordnung und Abständen den Lichtdurchlässen 9 in der Sonnenblende 8 entsprechen. Alternierend mit den Öffnungen 11 sind Verschlußabschnitte 12 für die Lichtdurchlässe 9 bildende Querstege zwischen den Öffnungen 11. Auf diese Weise wiederholt sich an der Verschlußplatte 10 das Gittermuster der Sonnenblende 8.

Anstelle der in den Zeichnungen dargestellten schlitzförmigen Lichtdurchlässe 9 in der Sonnenblende 8 und der entsprechenden Öffnungen 11 in der Verschlußplatte 10 können die Lichtdurchlässe und Öffnungen auch eine geometrisch abweichende Lage und Gestalt aufweisen, wenn lediglich sichergestellt ist, daß durch Verschieben der Verschlußplatte gegenüber der Sonnenblende eine vollständige Abdeckung aller Lichtdurchlässe in der Sonnenblende wie auch eine vollständige Freigabe dieser Lichtdurchlässe durch entsprechende Stegbereiche der Verschlußplatte 10 möglich ist.

Die Verschlußplatte 10 ist an dem Einfaßrahmen 4 des Glasdeckels 1 auf die nachfolgend erläuterte Weise längs verschiebbar gelagert. Zu diesem Zweck weist der Deckelrahmen 4 an seinem vorderen Querteil 13 und an seinen beiden seitlichen Längsteilen 14 eine der Glasscheibe 2 bzw. deren den Dekorrahmen 7 bildende Siebdruckbeschichtung unmittelbar benachbarte durchgehende Aufnahmenut 15 auf. In dieser Aufnahmenut 15 sind die zugeordneten Ränder der Verschlußplatte 10 verschiebbar geführt. Die Nut 15 wird im gezeigten Beispiel nach unten von der Oberseite des Verstärkungsrahmens 3 und nach oben von der Glasscheibe 2 bzw. deren Siebdruckbeschichtung begrenzt. Der Nutgrund wird durch eine Wandung des Einfaßrahmens 4 gebildet. Die Aufnahmenut 15 wird bereits bei der Anformung des Einfaßrahmens 4 angebracht. Das hintere Querteil 16 des Einfaßrahmens 4 besitzt keine Aufnahmenut.

Die Aufnahmenut 15 ermöglicht Längsverschiebungen der Verschlußplatte 10 gegenüber der Sonnenblende 8, wobei die in den Figuren 1 und 2 dargestellten Grenzstellungen der Verschlußplatte 10 möglich sind. In der vorderen Grenzstellung, in welcher die Lichtdurchlässe 9 in der Sonnenblende 8 vollständig von den Verschlußabschnitten 12 der Verschlußplatte 10 geschlossen sind, schlägt die Verschlußplatte 10 mit ihrer vorderen Kante an den Nutgrund des Aufnahmenutabschnitts des vorderen Querteils 13 an, wie in Figur 2 dargestellt ist. In der hinteren Grenzlage ist der vordere Rand der Verschlußplatte 10 aus dem Aufnahmenutabschnitt des vorderen Querteils 13 des Einfaßrahmens 4 ausgetreten, während die hintere Kante der Verschlußplatte 10 an das hintere Querteil 16 des Einfaßrahmens 4 angeschlagen ist, wie Figur 1 verdeutlicht. In dieser Stellung sind die Lichtdurchlässe 9 vollständig mit den Öffnungen 11 der Verschlußplatte 10 fluchtend ausgerichtet, so daß die Sonnenblende 8 vollständig geöffnet ist.

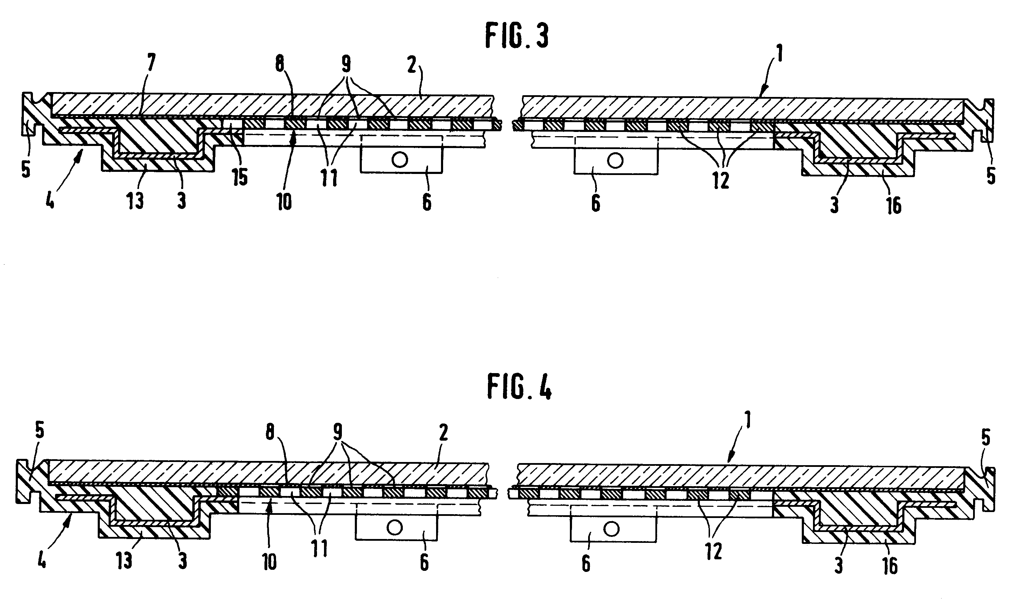

Die Verschlußplatte 10 besteht aus einem dünnen, federnd durchbiegbaren Material und ist mit ihren beiden seitlichen Rändern nach federndem Durchbiegen in die seitlichen Aufnahmenutabschnitte der Aufnahmenut 15 in den seitlichen Längsteilen 14 des Deckelrahmens 4 eingesteckt. Es verbleibt dabei soviel Querbewegungsspiel zwischen der Verschlußplatte 10 und den Nutgrundwänden der beiden Aufnahmenutabschnitte, daß die Verschlußplatte vollständig federnd in ihre Ausgangslage zurückspringt, in welcher sie der Unterfläche der Glasscheibe bzw. der darauf aufgedruckten Sonnenblendenbeschichtung anliegt. Sollte der Glasdeckel 1 in Querrichtung zur Anpassung an eine Dachwölbung gewölbt sein, so kann die Verschlußplatte 10 durch entsprechende Vorwölbung zur flächigen Anlage an die Glasscheibe 2 veranlaßt werden. Um die Verschlußplatte durch einfaches Einstecken in die seitlichen Aufnahmenutabschnitte am Glasdeckel 1 anbringen zu können, ist der Abstand zwischen dem vorderen Querteil 13 und dem hinteren Querteil 16 des Deckelrahmens 4 unter der Glasscheibe 2 um ein für die Anbringung erforderliches Spiel geringfügig größer als die Länge der Verschlußplatte 10 in Fahrzeuglängsrichtung. Diese Situation wird in Figur 3 veranschaulicht, welche die Montagelage zwischen den beiden Querteilen 13 und 16 zeigt.

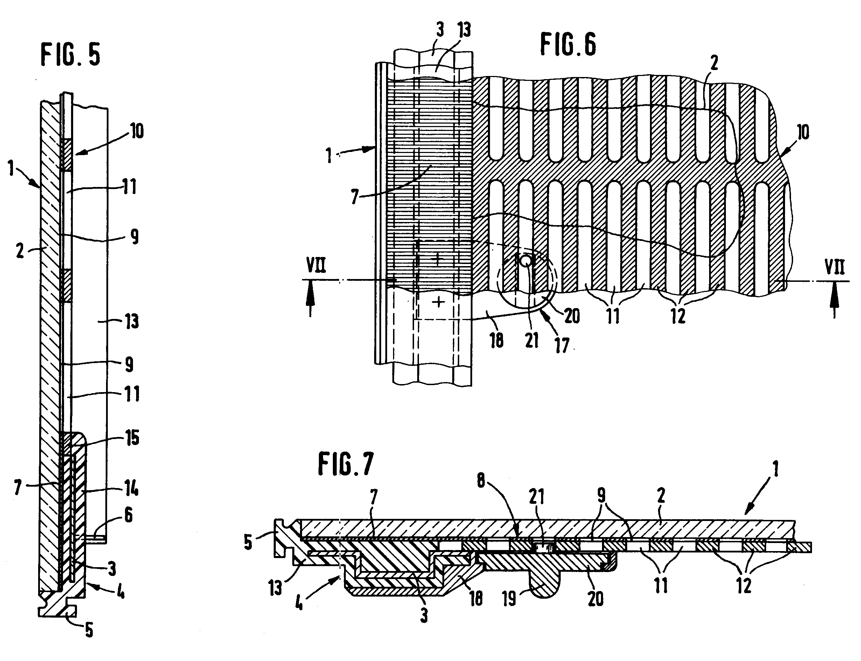

Die Verschlußplatte 10 läßt sich in Fahrzeuglängsrichtung um jeweils die kurze Strecke verschieben, die zwischen ihrer Vorderkante bzw. ihrer Hinterkante und dem jeweils benachbarten Anschlag vorhanden ist. Diese Verschiebebewegung kann durch unmittelbaren Handangriff an die Verschlußplatte, ggf. erleichtert durch daran angebrachte Handhaben vorgenommen werden. Im bevorzugten Ausführungsbeispiel ist hierfür jedoch eine Antriebsvorrichtung vorgesehen, zu deren Erläuterung nunmehr auf die Figuren 6 und 7 Bezug genommen wird. Die Antriebsvorrichtung 17 ist am vorderen Querteil 13 des Deckelrahmens 4 angebracht und besitzt eine drehbar aber axial unverschiebbar in einem Gehäuse 18 gelagerte und mit einem nach unten weisenden Handgriff 19 versehene flache kreisrunde Antriebsscheibe 20.

Die Antriebsscheibe 20 trägt an ihrer Oberseite einen exzentrisch angebrachten, nach oben vorstehenden Mitnehmerstift 21, welcher in einen der quer zur Fahrzeuglängsrichtung angebrachten schlitzförmigen Öffnungen 11 der Verschlußplatte 10 verschiebbar eingreift. Das ebenfalls flachbauende Gehäuse 18 ist mit dem vorderen Querteil 13 beispielsweise wie angedeutet durch Anschrauben fest verbunden. Bei Drehungen der Antriebsscheibe 20 mittels des Handgriffs 19 bewegt sich der Mitnehmerstift 21 nach Art eines Kurbelzapfens auf einer kreisförmigen Bahn um die Mittelachse der Antriebsscheibe, wobei er durch den Eingriff mit dem Lichtdurchlaß 9 je nach Drehrichtung eine Verschiebung der Verschlußplatte in der einen oder anderen Richtung hervorruft. Die gezeigte und beschriebene Antriebsvorrichtung 17 ist von überaus einfacher und funktionssicherer Konstruktion und dabei von so flacher Bauweise, daß sie keine nennenswerte Beeinträchtigung der Kopffreiheit darstellt. Infolge von auf die Verschlußplatte 10 einwirkenden Trägheitskräften im Fahrbetrieb stützt sich die Verschlußplatte 10 an dem Mitnehmerstift 21 ab, wobei eine Drehung der Antriebsscheibe 20 nur gegen eine erhebliche Reibung der Antriebsscheibe 20 an ihrem sie im Gehäuse 18 lagernden Umfang möglich ist. Für die Stellbewegung der Verschlußplatte 10 sind nur geringe Drehwinkel der Antriebsscheibe 20 erforderlich.

## Patentansprüche

1. Fahrzeugdach mit einem Glasdeckel (1), welcher eine Dachöffnung in einer Schließstellung ausfüllt, zur mindestens teilweisen Freigabe derselben verstellbar ist und mit einer an seiner Innenseite fest angebrachten Sonnenblende (8) versehen ist, die eine Reihe von gleichmäßig beabstandeten Lichtdurchlässen (9) aufweist und der eine als Schieber ausgebildete Verschlußplatte (10) zugeordnet ist, die an gegenüberliegenden Führungen parallel zur Sonnenblende (8) geführt ist und mit Verschlußabschnitten (12) zum wahlweisen vollständigen oder teilweisen Verschließen der Lichtdurchlässe (9) der Sonnenblende (8) und damit alternierenden Öffnungen (11) versehen ist, die mit den entsprechenden Lichtdurchlässen (9) der Sonnenblende (8) durch Verschieben der Verschlußplatte (10) wahlweise vollständig oder teilweise ausrichtbar sind, **dadurch gekennzeichnet,** daß die Sonnenblende (8) als lichtundurchlässige Beschichtung der Unterfläche des Glasdeckels (1) durch eine im Siebdruck aufgebrachte Farbschicht ausgebildet ist, welcher die Verschlußplatte (10) unmittelbar anliegt, die an dem Deckelrahmen (4) verschiebbar geführt ist, und daß die Verschlußplatte (10) aus einem dünnen, federnd durchbiegbaren Material hergestellt ist.

2. Fahrzeugdach nach Anspruch 1, **dadurch gekennzeichnet,** daß die durch Siebdruck zur Bildung der Sonnenblende (8) aufgebrachte Farbschicht gleichzeitig mit dem bei Glasdeckeln (1) üblichen randbündig umlaufenden, Funktionselemente nach außen abdeckenden und auf die Unterfläche des Glasdeckels (1) aufgedruckten Dekorrahmen (7) angebracht ist, wobei die durch den Dekorrahmen (7) eingefaßte Scheibeninnenfläche vollständig durch die Sonnenblende (8) ausgefüllt ist.

3. Fahrzeugdach nach Anspruch 1 oder 2, **dadurch gekennzeichnet,** daß der Deckelrahmen (4) innen an seinem vorderen Querteil (13) und seinen beiden seitlichen Längsteilen (14) eine der Glasscheibe (2) bzw. deren Beschichtung unmittelbar benachbarte durchgehende Aufnahmenut (15) für die darin verschiebbar geführten zugeordneten Außenränder der Verschlußplatte (10) aufweist.

4. Fahrzeugdach nach mindestens einem der Ansprüche 1 bis 3, **dadurch gekennzeichnet,** daß die Verschlußplatte (10) mit ihren beiden seitlichen Rändern nach federndem Durchbiegen in die seitlichen Aufnahmenutabschnitte (15) der seitlichen Längsteile (14) des Deckelrahmens (4) eingesteckt ist, wobei der Abstand zwischen dem vorderen Querteil (13) und dem hinteren Querteil (16) des Deckelrahmens (4) unter der Glasscheibe (2) um ein für die Anbringung der Verschlußplatte (10) erforderliches Spiel größer ist als die Länge der Verschlußplatte (10) in Fahrzeuglängsrichtung.

5. Fahrzeugdach nach mindestens einem der Ansprüche 1 bis 4, **dadurch gekennzeichnet,** daß an dem vorderen Querteil (13) des Deckelrahmens (4) eine Antriebsvorrichtung (17) für die Verschiebung der Verschlußplatte (10) in Fahrzeuglängsrichtung angebracht ist, bestehend aus einer drehbar aber axial unverschiebbar in einem Gehäuse (18) gelagerten und mit einem nach unten weisenden Handgriff (19) versehenen kreisrunden Antriebsscheibe (20), die an ihrer Oberseite einen exzentrisch angebrachten, nach oben vorstehenden Mitnehmerstift (21) trägt, welcher in einen quer zur Fahrzeuglängsrichtung angebrachten Schlitz der Verschlußplatte (10) verschiebbar eingreift.

6. Fahrzeugdach nach Anspruch 5, **dadurch gekennzeichnet,** daß der Schlitz für den Eingriff des Mitnehmerstifts (21) einer der Öffnungen (11) der Verschlußplatte (10) ist.

7. Fahrzeugdach nach mindestens einem der Ansprüche 1 bis 6, **dadurch gekennzeichnet,** daß die Lichtdurchlässe (9) in der Sonnenblende (8) vollständig von den Verschlußabschnitten (12) der Verschlußplatte (10) geschlossen sind, wenn die Verschlußplatte (10) bis zum Anschlag in den Aufnahmenutabschnitt (15) des vorderen Querteils (13) des Deckelrahmens (4) eingeschoben ist, jedoch vollständig geöffnet sind, wenn die Verschlußplatte (10) bis zum Anschlag an das hintere Querteil (16) des Deckelrahmens (4) verschoben ist.

## Claims

1. Vehicle roof comprising a glass lid (1), which completely fills a roof opening in a closed position, is adjustable for at least partly exposing the opening, and is provided with a sunshield (8) firmly attached to its inner face, which sunshield possesses a series of uniformly spaced light apertures (9) and with which is associated a closure plate (10) constructed as a slider, which is guided parallel to the sunshield (8) at mutually opposite guides and is provided with closure portions (12) for completely or partly closing the light apertures (9) of the sunshield (8) as desired and with openings (11) alternating with them, which openings can be completely or partly aligned as desired with the corresponding light apertures (9) of the sunshield (8) by sliding the closure plate (10), characterized in that the sunshield (8) is constructed as an opaque coating on the lower surface of the glass lid (1), formed as a coloured coating applied by screen printing, against which the closure plate (10), which is slidibly guided on the lid frame (4), directly bears, and in that the closure plate (10) is made from a thin, resiliently flexible material.

2. Vehicle roof according to Claim 1, characterized in that the coloured coating applied by screen printing to form the sunshield (8) is applied simultaneously with the decorative frame (7), usual with glass lids (1), extending around the lid flush with its edge, concealing functional elements from outside and printed onto the lower face of the glass lid (1), the internal area of the pane enclosed by the decorative frame (7) being completely filled by the sunshield (8).

3. Vehicle roof according to Claim 1 or 2, characterized in that the lid frame (4) possesses, internally on its front transverse member (13) and its two lateral longitudinal members (14), a continuous seating groove (15), immediately adjacent to the glass pane (2) and its coating, for the associated outer edges of the closure plate (10) slidably guided therein.

4. Vehicle roof according to at least one of Claims 1 to 3, characterized in that the closure plate (10) is inserted with its two lateral edges, after resilient bending, into the lateral seating groove portions (15) of the lateral longitudinal members (14) of the lid frame (4), the distance between the front transverse member (13) and the rear transverse member (16) of the lid frame (4) beneath the glass pane (2) being larger than the length of the closure plate (10) in the longitudinal direction of the vehicle by the play necessary for the fitting of the closure plate (10).

5. Vehicle roof according to at least one of Claims 1 to 4, characterized in that, on the front transverse member (13) of the lid frame (4), a drive apparatus (17) for the sliding of the closure plate (10) in the longitudinal direction of the vehicle is mounted, the apparatus consisting of a circular drive disc (20), journalled rotatably but axially immovably in a casing (18) and provided with a downwardly pointing handle (19), which disc possesses, on its upper face, an eccentrically mounted, upwardly projecting entraining pin (21), which slidably engages into a slit of the closure plate (10), orientated transversely to the longitudinal direction of the vehicle.

6. Vehicle roof according to Claim 5, characterized in that the slit for the engagement of the entraining pin (21) is one of the openings (11) of the closure plate (10).

7. Vehicle roof according to at least one of Claims 1 to 6, characterized in that the light apertures (9) in the sunshield (8) are fully closed by the closure portions (12) of the closure plate (10) when the closure plate (10) is pushed fully home into the seating groove portion (15) of the front transverse member (13) of the lid frame (4), but are fully opened when the closure plate (10) is pushed fully home against the rear transverse member (16) of the lid frame (4).

## Revendications

1. Toit de véhicule comprenant une trappe en verre (1) qui comble une ouverture du toit dans une position de fermeture, peut être déplacée pour dégager au moins partiellement cette ouverture et est munie d'un pare-soleil (8) agencé fixe sur sa face interne, qui présente une rangée de passages de lumière (9) uniformément espacés et auquel est associée une plaque obturatrice (10) constituée par un coulisseau, guidée parallèlement au pare-soleil (8) le long de glissières opposées, munie de segments obturateurs (12) qui servent à fermer entièrement ou partiellement, au choix, les passages de lumière (9) du pare-soleil (8), et munie d'ouvertures (11) alternant avec ces segments, qui peuvent être alignées totalement ou partiellement, au choix, avec les passages de lumière (9) correspondants du pare-soleil (8) par un déplacement de la plaque obturatrice (10), caractérisé en ce que le pare-soleil (8) formé d'un revêtement opaque de la surface inférieure de la trappe en verre (1), est constitué par une couche d'enduit déposée par impression à l'écran de soie, à laquelle est directement adjacente la plaque obturatrice (10) qui est guidée mobile en translation le long du cadre (4) de la trappe, et en ce que la plaque obturatrice (10) est réalisée en une matière mince qu'on peut courber élastiquement.

2. Toit de véhicule selon la revendication 1, caractérisé en ce que la couche d'enduit déposée par impression à l'écran de soie pour la formation du pare-soleil (8) est appliquée simultanément avec l'encadrement décoratif périphérique (7) longeant le bord, habituel dans le cas des trappes en verre (1), qui dissimule les éléments fonctionnels à la vue de l'extérieur et qui est déposé sur la surface inférieure de la trappe en verre (1), la surface intérieure de la vitre qui est encadrée par l'encadrement décoratif (7) étant entièrement occupée par le pare-soleil (8).

3. Toit de véhicule selon la revendication 1 ou 2, caractérisé en ce que le cadre (4) de la trappe présente intérieurement, le long de sa partie transversale avant (13) et de ses deux parties longitudinales latérales (14), une rainure réceptrice continue (15), directement adjacente à la vitre (2) ou à son revêtement, destinée à recevoir les bords extérieurs correspondants de la plaque obturatrice (10) guidés mobiles en translation dans cette rainure.

4. Toit de véhicule selon au moins une des revendications 1 à 3, caractérisé en ce que la plaque obturatrice (10) est emboîtée par ses deux bords latéraux dans les segments latéraux (15) de la rainure réceptrice des parties longitudinales latérales (14) du cadre (4) de la trappe, après avoir été courbée élastiquement, la distance entre la partie transversale avant (13) et la partie transversale arrière (16) du cadre (4) de la trappe, mesurée sous la vitre (2), étant supérieure à la longueur de la plaque obturatrice (10) dans la direction longitudinale du véhicule dans la mesure d'un jeu nécessaire pour la mise en place de la plaque obturatrice (10).

5. Toit de véhicule selon au moins une des revendications 1 à 4, caractérisé en ce que, sur la partie transversale avant (13) du cadre (4) de la trappe, est monté un dispositif d'entraînement (17) servant pour la translation de la plaque obturatrice (10) dans la direction longitudinale du véhicule, composé d'une molette d'entraînement circulaire (20), montée rotative mais bloquée en translation axiale dans un boîtier (18), munie d'une manette (19) pointant vers le bas, et qui porte sur sa face supérieure un doigt d'entraînement (21) disposé excentriquement en saillie vers le haut et engagé mobile en translation dans une fente prévue dans la plaque obturatrice (10) transversalement à la direction longitudinale du véhicule.

6. Toit de véhicule selon la revendication 5, caractérisé en ce que la fente destinée à l'engagement du doigt d'entraînement (21) est une des ouvertures (11) de la plaque obturatrice (10).

7. Toit de véhicule selon au moins une des revendications 1 à 6, caractérisée en ce que les passages de lumière (9) ménagés dans le pare-soleil (8) sont entièrement fermés par les segments obturateurs (12) de la plaque obturatrice (10) lorsque la plaque obturatrice (10) est engagée jusqu'en butée dans le segment (15) de rainure réceptrice de la partie transversale avant (13) du cadre (4) de la trappe, mais sont entièrement ouverts lorsque la plaque obturatrice (10) est repoussée jusqu'en butée contre la partie transversale arrière (16) du cadre (4) de la trappe.
